# EUROPÄISCHE PATENTANMELDUNG

(11) **EP 4 813 566 A1**
(43) Veröffentlichungstag der Anmeldung: **30.09.2026**
(21) Anmeldenummer: 25165775.5
(22) Anmeldetag: 24.03.2025
(51) Int. Cl.: B23Q 3/155

(54) **WERKZEUGWECHSELSYSTEM FÜR MATERIALENTFERNENDE BEARBEITUNGSANLAGEN, INSBESONDERE ZUR HERSTELLUNG VON DENTALTEILEN**

(71) Anmelder: Dental Concept Systems GmbH, 34399 Wesertal (DE)
(72) Erfinder: LEININGER Matthias, 90469 Nürnberg (DE); CHERNYAK, Artem, 90469 Nürnberg (DE); REINS, Hartmut, 34399 Wesertal (DE)
(74) Vertreter: Hafner & Kohl PartmbB

(57) **Zusammenfassung**

Werkzeugwechselsystem (1) für materialentfernende Bearbeitungsanlagen (2), insbesondere zur Herstellung von Dentalteilen, umfassend
- ein Werkzeugmagazin (3) mit einer ersten Aufnahmeeinheit (4) zur Aufnahme eines ersten materialentfernenden Werkzeugs (5) und mit wenigstens einer zweiten Aufnahmeeinheit (6) zur Aufnahme des ersten und/oder eines zweiten materialentfernenden Werkzeugs (5, 5'), wobei
- die wenigstens zwei Aufnahmeeinheiten (4, 6) jeweils eine Klemmeinrichtung (8) aufweisen, vermittels der die in die jeweilige Aufnahmeeinheit (4, 6) aufzunehmenden Werkzeuge (5, 5') unter Beaufschlagung mit wenigstens einer Klemmkraft (9) befestigbar sind.

## Beschreibung

Die Erfindung betrifft ein Werkzeugwechselsystem für materialentfernende Bearbeitungsanlagen, insbesondere zur Herstellung von Dentalteilen.

Entsprechende Werkzeugwechselsysteme für materialentfernende Bearbeitungsanlagen, insbesondere zur Herstellung von Dentalteilen sind aus dem Stand der Technik dem Grunde nach bekannt. So ist es bekannt, eine materialentfernende Bearbeitungsanlage, insbesondere zur Herstellung von Dentalteilen mit einem mehrere Werkzeuge aufweisenden Magazin auszustatten, wobei in Abhängigkeit des Bearbeitungsauftrags und/oder eines Bearbeitungsschritts die materialentfernende Bearbeitungsanlage gezielt ein wechselweise ein für diesen Bearbeitungsauftrag bestimmtes Werkzeug aus dem Magazin herausgreift und ggf. im Gegenzug ein bereits in einer Werkzeugschnittstelle der Bearbeitungsanlage befindliches Werkzeug in das Magazin einsetzt. Die Bearbeitungsanlage kann hierbei eine CNC-Maschine sein, deren Werkzeugschnittstelle (Werkzeugaufnahme) automatisiert auf ein in dem Werkzeugmagazin bevorratetes Werkzeug zuführbar ist, das Werkzeug greift bzw. an sich fixiert und sodann zu einem Bearbeitungsraum bewegt wird, um dort eine materialentfernende Bearbeitung an einem Bauteil vorzunehmen.

Der Erfindung liegt die Aufgabe zugrunde, ein Werkzeugwechselsystem für materialentfernende Bearbeitungsanlagen, insbesondere zur Herstellung von Dentalteilen, anzugeben, welches auf zuverlässig und reproduzierbare Weise ein Herausnehmen und/oder Einsetzen eines Werkzeugs in ein Magazin des Werkzeugwechselsystems ermöglicht. Insbesondere soll die Zuverlässigkeit eines automatisiert durch computergestützte Ansteuerung erfolgendes Herausnehmen und/oder Einsetzen des Werkzeugs aus dem Werkzeugmagazin gesteigert werden, bzw. durch das Werkzeugwechselsystem eine geringere Steuerungsgenauigkeit erforderlich sein.

Die Aufgabe wird durch ein Werkzeugwechselsystem für materialentfernende Bearbeitungsanlagen, insbesondere zur Herstellung von Dentalteilen, gemäß Anspruch 1 gelöst. Die hierzu abhängigen Ansprüche betreffen mögliche Ausführungsformen des Werkzeugwechselsystems. Ferner wird die Aufgabe durch eine Aufnahmeeinheit gemäß Anspruch 12, durch ein Werkzeug gemäß Anspruch 13 und 14, durch eine materialentfernende Bearbeitungsanlange nach Anspruch 15 sowie durch ein Verfahren gemäß Anspruch 16 gelöst.

Die Erfindung betrifft ein Werkzeugwechselsystem für materialentfernende Bearbeitungsanlagen, insbesondere zur Herstellung von Dentalteilen. Beispielsweise ist die materialentfernende Bearbeitungsanlage, auch Bearbeitungszentrum genannt, eine CNC-Maschine. So kann gestützt auf computergestützt erzeugten Daten, z. B. CAD-Daten, Steuerungsinformationen zur Ansteuerung der Bearbeitungsanlage verwendet werden. Beispielsweise kommt hierbei ein CAM-System (Computer-aided Manufacutring) zum Einsatz. Eine Werkzeugaufnahme bzw. eine Werkzeugschnittstelle, welche an einem freien Ende einer Spindel angeordnet ist, kann aktorgestützt zumindest zwischen einem Werkzeugmagazinbereich, an welchem gezielt ein an dem Werkzeugmagazin bevorratetes Werkzeug greifbar ist und einem Arbeitsbereich, an welchem, vermittels dem in der Werkzeugschnittstelle befindlichen Werkzeug eine materialabtragende Bearbeitung an einem am Arbeitsbereich gehaltenen Werkstück ausführbar ist.

Die Bearbeitungsanlage kann beispielsweise eingerichtet sein, fräsend und/oder bohrend und/oder schleifend und/oder schneidend auf ein Werkstück einzuwirken bzw. dieses entsprechend zu bearbeiten. Das mit der Bearbeitungsanlage zu bearbeitende Werkstück kann beispielsweise ein Dentalteil sein, also ein Bauteil das grundsätzlich der Zahntechnik zuzuordnen ist. Beispiele hierfür sind Zahnersatzbauteile, wie beispielsweise Zahnkronen, Brücken, Teil- und Vollprothesen, Inlays, kieferorthopädische Behandlungsgeräte, Knirscherschienen wie auch Schienen für Kieferbrüche oder Mundschutze für bestimmte Sportarten.

Beispielsweise besteht ein zu bearbeitendes Werkstück, insbesondere eine als Scheibe ausgebildeter Bearbeitungsrohling, beispielsweise aus einem Metall und/oder einer Keramik (z. B. Zirkonoxid) und/oder einem Kunststoff und/oder Wachs. Insbesondere kann das zu bearbeitende Werkstück aus einer Chrom-Cobalt-Legierung oder einer Chrom-Cobalt-Molybdän-Legierung bestehen. Optional kann das Werkstück aus einem thermoplastischen und/oder transparenten Kunststoff bestehen, z. B. Polymethylmethacrylat (PMMA). Auch eine Bearbeitung von aus Gold, Platin oder Titan bestehenden Werkstücken ist möglich. Das zu bearbeitende Werkstück kann beispielsweise eine standardisierte Form aufweisen, beispielsweise die Form einer runden, insbesondere kreisrunden, Scheibe. Derartige scheibenförmige Werkstücke können beispielsweise einen Durchmesser zwischen 80 mm und 120 mm, insbesondere 100 mm, aufweisen. Es ist möglich, dass die scheibenförmigen Werkstücke über deren Mantelfläche eine Stufe und/oder einen Absatz aufweisen.

Die Bearbeitungsanlage umfasst ein Werkzeugmagazin mit einer ersten Aufnahmeeinheit zur Aufnahme eines ersten materialentfernenden Werkzeugs, z. B. eines ersten Fräswerkzeugs, und mit wenigstens einer zweiten Aufnahmeeinheit zur Aufnahme eines zweiten materialentfernenden Werkzeugs, z. B. eines zweiten Fräswerkzeugs. In den Aufnahmeeinheiten des Werkzeugmagazins können beispielsweise unterschiedliche Arten von Werkzeugen angeordnet sein. So kann in einer ersten Aufnahmeeinrichtung ein als Fräswerkzeug ausgebildetes Werkzeug und in einer weiteren Aufnahmeeinrichtung desselben Werkzeugmagazins ein als Bohrer ausgebildetes Werkzeug aufgenommen oder aufnehmbar sein. Alternativ oder zusätzlich kann das materialentfernende Werkzeug zum Ausführen eines spanabhebenden Bearbeitungsverfahrens eingerichtet sein. Dabei kann das Werkzeug beispielsweise eine längliche und/oder stabartige Grundform und/oder eine zylinderförmige, insbesondere kreiszylinderförmige, Grundform aufweisen. Vorzugsweise weist das Werkzeug an einem Mantelflächenabschnitt und/oder an einer Stirnseite wenigstens eine Schneide auf.

Typischerweise weist das Werkzeugmagazin der Bearbeitungsanlage mehr als vier, bevorzugt mehr als sechs, besonders bevorzugt mehr als 10, besonders bevorzugt mehr als 14, höchst bevorzugt mehr als 16, Aufnahmeeinheiten auf, in welche jeweils ein Werkzeug aufnehmbar ist.

Die wenigstens zwei Aufnahmeeinheiten weisen jeweils eine Klemmeinrichtung auf, vermittels der die in die jeweilige Aufnahmeeinheit aufzunehmenden Werkzeuge unter Beaufschlagung mit wenigstens einer Klemmkraft befestigbar sind. Durch die kraftschlüssige bzw. durch die Klemmkraft erfolgende, temporäre Befestigung der Werkzeuge in den Aufnahmeeinheiten, kann ein vereinfachtes Entnehmen und Einsetzen erreicht werden. Während des Einsetzens und Entnehmens der Werkzeuge ist die Klemmkraft jeweils zu überwinden.

Es ist möglich, dass wenigstens eine Klemmeinrichtung ein Vorspannmittel umfasst, das eingerichtet ist, die wenigstens eine Klemmkraft, welche im an der Aufnahmeeinheit aufgenommenen Zustand eines Werkzeugs das Werkzeug beaufschlagt, bereitzustellen. Vorzugsweise weist jede Aufnahmeeinheit jeweils eine eigene Klemmeinrichtung und jeweils wenigstens ein Vorspannmittel auf, um die an der jeweiligen Aufnahmeeinheit vorliegende Klemmkraft bereitzustellen. Das Vorspannmittel kann beispielsweise als Elastomer bzw. als elastischer Kunststoff oder als Gummi und/oder als mechanische Feder, insbesondere Zug- oder Druckfeder, ausgebildet sein. Vorzugsweise kann als Vorspannmittel eine Schraubenfeder verwendet werden. Die Schraubenfeder kann als Schraubenzug- und/oder Schraubendruckfeder ausgebildet sein. Vorzugsweise kann die Schraubenfeder eine zylindrische, insbesondere kreiszylindrische, Grundform aufweisen.

Die Klemmeinrichtung kann beispielsweise ein Basismittel und wenigstens ein Klemmmittel umfassen, wobei das wenigstens eine Klemmmittel beweglich an dem Basismittel gelagert ist und über das wenigstens eine Klemmmittel das an der Aufnahmeeinheit aufgenommene Werkzeug mit der Klemmkraft, insbesondere unmittelbar, beaufschlagbar ist. Das wenigstens eine Klemmmittel ist ein von dem Basismittel separates Bauteil, wobei das wenigstens einen Klemmmittel bewegbar an dem Basismittel gelagert ist. Hierzu kann das Klemmmittel an einer Aufnahmestruktur des Basismittels aufgenommen oder aufnehmbar sein und innerhalb der Aufnahmestruktur eine, wenn auch bedingte und/oder begrenzte Bewegbarkeit aufweisen. Eine bedingte Bewegbarkeit kann beispielsweise bedeuten, dass die Bewegbarkeit nur durch Überschreiten einer vordefinierten, insbesondere durch das Vorspannmittel vorgegebenen und/oder beeinflussten, Lösekraft bzw. Bewegungskraft lösbar ist. Beispielsweise spannt die vom Vorspannmittel erzeugte Vorspannkraft das Klemmmittel in eine definierte Position vor, sodass zunächst keine Bewegbarkeit des Klemmmittels bei Beaufschlagung mit einer Bewegungskraft für den Fall ergibt, dass die Bewegungskraft die am Klemmmittel anliegende Vorspannkraft nicht überschreitet. Erst wenn eine die Vorspannkraft überschreitende Bewegungskraft an dem Klemmmittel anliegt, wird dieses innerhalb der durch das Basismittel vorgegebenen Bewegungsgrenzen bewegt bzw. verlagert. Dadurch, dass für das Einsetzen und für die Entnahme des Werkzeugs in bzw. aus einer Aufnahmeeinheit eine definierte, durch das Vorspannmittel hervorgerufene bzw. definierte Vorspannkraft überwunden werden muss, kann im automatisiert erfolgenden Einsetzen und Entnehmen des Werkzeugs eine definierte Kraftsituation und Gegenkraftsituation erreicht werden, welche bei der automatisierten Steuerung für die Reproduzierbarkeit vorteilhaft ist. Das Basismittel kann eine Lagerungsstruktur aufweisen, welche das Klemmmittel verliersicher bzw. mechanisch gefangen hält. Das wenigstens eine Klemmmittel kann beispielsweise die Form einer Kugel aufweisen.

In einer vorteilhaften Ausführungsform kann die Klemmeinrichtung ein erstes und wenigstens ein zweites Klemmmittel umfassen, wobei ein an der Aufnahmeeinheit aufgenommenes Werkzeug an einer ersten Seite, insbesondere an einer ersten Längsseite, von dem ersten Klemmmittel und das Werkzeug an einer zweiten, von der ersten Seite unterschiedlichen, bevorzugt gegenüberliegenden, Seite, insbesondere Längsseite, von dem zweiten Klemmmittel beaufschlagbar ist oder beaufschlagt wird. Damit kann das Werkzeug im in die Aufnahmeeinheit eingesetzten Zustand mit den Klemmkräften von wenigstens zwei, bevorzugt drei, Klemmmittelen beaufschlagt werden. Beispielsweise weist die Klemmeinrichtung wenigstens drei Klemmmittel auf, die eingerichtet sind, die von den Klemmmitteln auf das an der Aufnahmeeinheit aufgenommene Werkzeug einwirkenden Klemmkräfte gleichmäßig und/oder innerhalb einer gemeinsamen Ebene der Klemmkraftvektoren zu beaufschlagen. Optional können die Klemmmittel um 120° +/- 15° voneinander beabstandet sein.

Es ist möglich, dass die Klemmeinrichtung ein erstes und wenigstens ein zweites Klemmmittel umfasst, wobei ein an der Aufnahmeeinheit aufgenommenes Werkzeug an seiner nach radial außen weisenden Oberfläche von dem wenigstens einen Klemmmittel beaufschlagbar ist. Beispielsweise beaufschlagt ein erstes Klemmmittel das in die Aufnahmeeinheit aufgenommene Werkzeug an einem ersten, nach radial außen weisenden Oberflächenabschnitt und ein zweites Klemmmittel dasselbe Werkzeug an einem zweiten, nach radial außen weisenden Oberflächenabschnitt.

Das wenigstens eine Klemmmittel, insbesondere wenigstens zwei Klemmmittel jeweils, kann bzw. können radial zu einer bestimmungsgemäßen Rotationsachse und/oder radial zu einer Haupterstreckungsachse des an der Aufnahmeeinheit aufgenommenen Werkzeugs das an der Aufnahmeeinheit aufgenommene Werkzeug beaufschlagen. Mit anderen Worten kann ein Kraftvektor einer Klemmkraft wenigstens eines Klemmmittels, insbesondere die Kraftvektoren sämtlicher Klemmmittel einer Aufnahmeeinheit, senkrecht zu einer Rotationsachse und/oder zu einer Haupterstreckungsachse eines in die Aufnahmeeinheit aufgenommenen Werkzeugs verlaufen.

Es ist möglich, dass wenigstens zwei Klemmmittel, insbesondere wenigstens drei Klemmmittel, in einer gemeinsamen Ebene angeordnet sind. Alternativ oder zusätzlich können die Kraftvektoren der auf das in der Aufnahmeeinheit aufgenommenen Werkzeug wirkenden Klemmkräfte in einer gemeinsamen Ebene liegen und/oder senkrecht zu einer Haupterstreckungsachse eines bestimmungsgemäß in der Aufnahmeeinheit aufgenommenen Werkzeugs und/oder senkrecht zu einer Haupterstreckungsachse eines zur Aufnahme des Werkzeugs an der Aufnahmeeinheit ausgebildeten Ausnahmekanals ausgerichtet sein.

Das Vorspannmittel kann beispielsweise als Schraubenfeder, insbesondere als Schraubendruck- und/oder Schraubenzugfeder, ausgebildet sein und eine Mittelachse der Schraubenfeder zu einem Bewegungsweg des Klemmmittels und/oder zu einem Klemmkraftvektor des Klemmmittels einen Winkel α im Bereich von 30° bis 150°, bevorzugt 45° bis 135°, besonders bevorzugt 65° bis 115°, weiter bevorzugt 80° bis 100°, einschließen. In einer vorteilhaften Ausführungsform beträgt der Winkel α 90°. Mit anderen Worten verläuft eine Mittelachse der Schraubenfeder parallel zu der Haupterstreckungsachse 16 bzw. zur Längsachse eines in der Aufnahmeeinheit aufgenommenen Werkzeugs. Die Mittelachse der Schraubenfeder kann deren Längsachse sein. Insbesondere betrifft die Mittelachse der Schraubenfeder deren Hauptbewegungsachse bzw. deren Stauchungs- und Expansionsbewegungsachse.

Äußere Oberfläche bzw. eine nach radial außen gerichtete Oberfläche der Innenhülse des Innenteils und/oder eine innere Oberfläche bzw. eine nach radial innen weisende Oberfläche der Außenhülse des Außenteils kann bzw. können als Stütz- bzw. Führungswände für wenigstens ein zwischen dem Innen- und Außenteil aufgenommenen Vorspannmittel und/oder Vorspannelement dienen. Damit kann die Gefahr eines Verschiebens und/oder Knickens von Schraubenfedern oder sonstigen länglichen, eine Vorspannung erzeugenden Bauteilen verhindert werden.

Es ist möglich, dass das Basismittel einen mit einem Aufnahmekanal zur Aufnahme des Werkzeugs versehenen Innenkörper und wenigstens einen zumindest abschnittsweise, bevorzugt überwiegend, außerhalb des Innenkörpers angeordneten Außenkörper umfasst, wobei der Innenkörper und der Außenkörper zueinander bewegbar gelagert sind. Beispielsweise bilden Innen- und Außenkörper einen Aufnahmeraum aus bzw. definieren einen solchen, wobei in dem Aufnahmeraum ein Vorspannmittel der Klemmeinrichtung, insbesondere verliersicher, angeordnet oder ausgebildet ist. Das Vorspannmittel ist dabei eingerichtet, die wenigstens eine Klemmkraft, welche im an der Aufnahmeeinheit aufgenommenen Zustand eines Werkzeugs das Werkzeug beaufschlagt, bereitzustellen. Die Bewegungsachse der Relativbewegung von Innen- und Außenkörper verläuft vorzugsweise parallel zu einer Längsachse des Aufnahmekanals. Innenkörper und/oder Außenkörper ist bzw. sind vorzugsweise als Hülse(n) ausgebildet. Vorzugsweise umgibt der Außenkörper zumindest abschnittsweise den Innenkörper an dessen Mantelfläche. Innenkörper und/oder Außenkörper kann bzw. können eine zylindrische, insbesondere eine kreiszylindrische, Grundform aufweisen. Vorzugsweise sind Innen- und Außenkörper koaxial zueinander ausgerichtet.

In einer bevorzugten Weiterbildung kann beispielsweise in Abhängigkeit einer relativen Position von Innen- und Außenkörper der mögliche Bewegungsraum und/oder die Position des wenigstens einen, insbesondere sämtlicher, Klemmmittel(s) zumindest einer Aufnahmeeinheit veränderbar sein. So kann beispielsweise der basismittelseitig begrenzte Bewegungsraum des wenigstens einen Klemmmittels je nach relativen Positionierung von Innen- und Außenkörper zueinander unterschiedlich sein. Beispielsweise ist der zumindest basismittelseitig vorgegebene Bewegungsraum in einer ersten Relativposition von Innen- und Außenkörper auf ein Minimum beschränkt, z. B. Nichtbewegbarkeit des Klemmmittels, und in einer zweiten Relativposition gegenüber dem Bewegungsraum der ersten Relativposition, vergrößert.

Beispielsweise kann in einer durch eine Vorspannkraft des Vorspannmittels gedrängte bzw. hinbewegten erste Relativposition von Innen- und Außenkörper das Klemmmittel an einem ersten, insbesondere radial innenliegenden, definierten Ort angeordnet sein. Wenn der Vorspannkraft des Vorspannmittels eine Kraft auf das Basismittel, insbesondere auf den Außenkörper, entgegenwirkt, liegt eine zweite, zur ersten Relativposition unterschiedliche Relativposition von Innen- und Außenkörper vor, wobei während dieser zweiten Relativposition das Klemmmittel an einem zweiten, von dem ersten definierten Ort unterschiedlichen Ort angeordnet ist. Beispielsweise wird durch die Relativbewegung von Innen- und Außenkörper ein Bewegungsraum des wenigstens einen Klemmmittels verändert, insbesondere vergrößert. Innerhalb des veränderten und/oder vergrößerten, von dem Basismittel, insbesondere von dem Innen- und Außenkörper, begrenzten bzw. definierten Bewegungsraum kann das wenigstens einen Klemmmittel durch Einwirken von äußeren Kräften, z. B. durch eine von einem in die Aufnahmeeinheit eingeführten oder ausgeführten Werkzeugs übertragenen bzw. induzierten Druckkraft und/oder Zugkraft und/oder durch Einwirken der Schwerkraft, bewegbar sein bzw. bewegt werden.

In einer bevorzugten Ausführungsform kann wenigstens ein materialentfernendes Werkzeug vorgesehen sein, das einen zumindest eine Bearbeitungsstruktur, insbesondere eine Schneide, aufweisenden Grundkörper sowie einen radial von dem Grundkörper abstehenden Anschlusskörper umfasst, wobei im an der Aufnahmeeinheit aufgenommenen Zustand des Werkzeugs, insbesondere ausschließlich, der Anschlusskörper in Kontakt mit der Aufnahmeeinheit steht. Der Anschlusskörper kann beispielsweise einen Anschlusskontaktabschnitt umfassen, der eine mit dem Klemmmittel korrespondierende Geometrie aufweist. Beispielsweise weist der Anschlusskontaktabschnitt eine konkave Form und das Klemmmittel eine konvexe Form auf. Der Anschlusskontaktabschnitt kann beispielsweise, bevorzugt überwiegend (Anteil der Kontaktfläche), besonders bevorzugt ausschließlich, an einer radial nach außen weisenden Oberfläche, insbesondere Mantelfläche, eines eine rotationssymmetrische Form aufweisenden Anschlusskörpers angeordnet oder ausgebildet sein.

Der Anschlusskörper kann beispielsweise (a) einen, insbesondere eine Kegelform oder Kegelstumpfform, an einem axialen Endbereich ausgebildeten Zentrierabschnitt und/oder (b) einen, in einem axialer Mittelbereich des Anschlusskörpers ausgebildeten Anschlusskontaktabschnitt und/oder (c) einen, an einer einem Arbeitsabschnitt des Grundkörpers abgewandten Seite angeordnet oder ausgebildet und eine im Vergleich zum Anschlusskontaktabschnitt sich radial vergrößerten Anschlagabschnitt aufweisen. Der Zentrierabschnitt ermöglicht während eines Einführens bzw. Zusammenführens von Werkzeug und Aufnahmeeinheit ein Zentrieren, insbesondere ein Zentrieren hin zu einem koaxialen Ausrichten der Aufnahmeeinheit und des Werkzeugs. Der Anschlusskontaktabschnitt, welcher zur, insbesondere unmittelbaren, Beaufschlagung mit der Klemmkraft vorgesehen ist, kann vorzugsweise zwischen dem Zentrierabschnitt und dem Anschlagabschnitt platziert sein. Vorzugsweise ist der Anschlusskontaktabschnitt mindestens in einem Bereich von 20 % bis 100 %, bevorzugt 30 % bis 100 %, besonders bevorzugt 40 % bis 100 %, der Länge des Werkzeugs angeordnet.

Der Anschlagabschnitt kann beispielsweise eine teller- bzw. scheibenartige Grundform aufweisen. Mit anderen Worten kann der Anschlagabschnitt einen insbesondere über 360° um die Längsachse bzw. Haupterstreckungsachse 16 des Werkzeugs sich erstreckenden, bevorzugt unterbrochenen oder ununterbrochenen, Kragen ausbilden. Der Kragen kann beispielsweise radial abstehen bzw. sich senkrecht von einer Längsachse des Werkzeugs erstrecken. Dieser Kragen kann zumindest abschnittsweise als Anschlag dienen, der im Aufnahmezustand des Werkzeugs in der Aufnahmeeinheit, insbesondere ausschließlich, mit dem Basismittel, beispielsweise mit dem Innenkörper und/oder Außenkörper, in unmittelbaren Kontakt steht. Mit anderen Worten liegt der Anschlagabschnitt auf dem Innenkörper auf. Bevorzugt wirkt eine Vorspannkraft zwischen dem Anschlusskontaktabschnitt und dem wenigstens einen Klemmmittel derart, dass das Werkzeug in eine Einführrichtung in die Aufnahmeeinheit vorgespannt wird.

Das Werkzeugmagazin kann beispielsweise einen mit wenigstens einer Aufnahmeausnehmung versehenen Basiskörper aufweisen, wobei wenigstens eine Aufnahmeeinheit bewegbar zumindest abschnittsweise in die Aufnahmeausnehmung aufnehmbar oder aufgenommen ist, wobei die wenigstens eine Aufnahmeeinheit vermittels wenigstens eines Vorspannelements in eine definierte Position vorgespannt ist. Beispielsweise bildet das Vorspannelement eine Vorspannkraft aus, die einer Richtung einer Einführkraft des in die Aufnahmeeinheit einzusetzenden Werkzeugs entgegenwirkt.

Vorzugsweise sind das Vorspannelement und das Vorspannmittel als längliche Elemente ausgebildet, insbesondere als Schraubenfedern, wobei das Vorspannelement und das Vorspannmittel parallel, insbesondere koaxial, zueinander ausgerichtet sind.

Der Basiskörper kann beispielsweise einen ersten und wenigstens einen weiteren Basisteilkörper umfassen, wobei die Basisteilkörper kraft- und/oder form- und/oder stoffschlüssig miteinander verbunden oder verbindbar sind. Vorzugsweise sind die wenigstens zwei Basisteilkörper lösbar miteinander befestigt. Insbesondere können die wenigstens zwei Basisteilkörper über Verbindungsmittel miteinander verbunden sein. Bevorzugt kann sich die Aufnahmeausnehmung bzw. der Aufnahmekanal zur Aufnahme der Aufnahmeeinheit sich zumindest abschnittsweise, bevorzugt überwiegend, besonders bevorzugt vollständig, in die wenigstens zwei Basisteilkörper erstrecken.

Beispielsweise wenigstens eine Aufnahmeeinheit, bevorzugt die überwiegende Anzahl der Aufnahmeeinheiten, besonders bevorzugt sämtliche Aufnahmeeinheiten, des Werkzeugmagazins können mechanische gefangen bzw. verliersicher an dem Basiskörper, insbesondere in einem als Ausnehmung ausgebildeten Aufnahmebereich zwischen wenigstens zwei miteinander befestigten, insbesondere zusammengebauten, Basisteilkörpern angeordnet oder anordenbar sein. Beispielsweise wird zuerst die wenigstens eine Aufnahmeeinheit an die, insbesondere in die, Aufnahmeeinheit eines ersten Basisteilkörpers an- bzw. eingesetzt und dann der zweite Basisteilkörper an den ersten Basisteilkörper angesetzt und befestigt, wobei aufgrund von Formschluss die Aufnahmeeinheit zwischen den wenigstens zwei Basisteilkörpern in definierten Grenzen bewegbar gelagert ist.

Beispielsweise ist die wenigstens eine Aufnahmeeinheit, bevorzugt die überwiegende Anzahl der Aufnahmeeinheiten, besonders bevorzugt sämtliche Aufnahmeeinheiten, des Werkzeugmagazins linearbeweglich und kippbar an dem Basiskörper gelagert. So kann z. B. die wenigstens eine Aufnahmeeinheit in einem Bereich von 0,1 mm bis 10 mm, bevorzugt 0,2 mm bis 5,0 mm, besonders bevorzugt 0,3 mm bis 3,0 mm, höchst bevorzugt 0,3 mm bis 1,5 mm, linearbeweglich und/oder um einen Winkel β im Bereich von 0,1° bis 20 °, bevorzugt 0,2° bis 15°, besonders bevorzugt 0,3° bis 10°, weiter bevorzugt 0,4° bis 6°, höchst bevorzugt 0,4° bis 6°, um eine Mittellängsachse der Aufnahmeeinheit kippbar sein. Die Kippbarkeit der wenigstens einen Aufnahmeeinheit kann, beispielsweise dadurch erreicht werden, dass die Aufnahmeeinheit durch ein an einem ersten Basisteilkörper angeordnetes Vorspannelement, vermittels dessen Vorspankraft, in eine von dem ersten Basisteilkörper wegweisenden Richtung vorgespannt ist. Ferner wird dabei die Aufnahmeeinheit mit ihrem wenigstens einen Kontaktbereich gegen wenigstens einen Gegenkontaktbereich des Basiskörpers, insbesondere des zweiten Basisteilkörpers, gedrückt bzw. liegt an diesem an. Diese Kontaktsituation an dem zweiten Basisteilkörper (an dessen Gegenkontaktbereich) und der Aufnahmeeinheit (an dessen Kontaktbereich) kann beispielsweise (a) wenigstens zwei oder (b) genau zwei oder (c) genau drei voneinander beabstandete Kontaktbereiche und/oder Gegenkontaktbereiche aufweisen, wobei die Aufnahmeeinheit über eine Kippachse, welche durch zwei der Kontaktbereiche und/oder durch wenigstens zwei Gegenkontaktbereiche verläuft bzw. an zwei der Kontaktbereichen und/oder an zwei der Gegenkontaktbereiche anliegt, gekippt wird bzw. kippbar ist. Die Kippachse kann vorzugsweise senkrecht zu einer Haupterstreckungsachse der Aufnahmeeinheit und/oder des in der Aufnahmeeinheit aufgenommenen Werkzeugs verlaufen und/oder parallel zu einer Bewegungsachse wenigstens eines Klemmmittels verlaufen.

Beispielsweise weist die Hervorhebung wenigstens zwei einander zulaufende Gleitflächen auf, die mit Gegengleitflächen der Ausnehmung korrespondieren, insbesondere parallel hierzu ausgerichtet sind. Allgemein ist die Aufnahmeeinheit in dem Basiskörper begrenzt bewegbar und begrenzt kippbar gelagert, wobei aufgrund des Vorspannelements im von äußeren Kräften freien Zustand, das Vorspannmittel das von der Aufnahmeeinheit aufgenommene Werkzeug in eine definierte Position und/oder Ausrichtung relativ zu dem Basiskörper bzw. relativ zu dem Werkzeugmagazin aktiv ausrichtet.

Zusätzlich zu dem Werkzeugwechselsystem betrifft die Erfindung ein Aufnahmeeinheit für ein hierin beschriebenes Werkzeugwechselsystem. So kann z. B. das Werkzeugwechselsystem wenigstens einen, bevorzugt wenigstens zwei Aufnahmeraum bzw. Aufnahmeräume aufweisen, in welchen bzw. in welche eine Aufnahmeeinheit montierbar ist. Beispielsweise ist die wenigstens eine Aufnahmeeinheit lösbar in einem Werkzeugwechselsystem, insbesondere in einem Werkzeugwechselsystem, montiert, sodass eine Demontage einer Aufnahmeeinheit, z. B. zu Wartungs- und/oder Reinigungszwecken, und/oder ein Austausch von Aufnahmeeinheiten ausführbar ist.

Neben dem Werkzeugwechselsystem betrifft die Erfindung ein Werkzeug für eine materialentfernende Bearbeitungsanlage, insbesondere zur Herstellung von Dentalteilen, wobei die Bearbeitungsanlage ein hierin beschriebenes Werkzeugwechselsystem aufweist. Ferner betrifft die Erfindung auch eine materialentfernende Bearbeitungsanlage, insbesondere zur Herstellung von Dentalteilen, umfassend ein hierin beschriebenes Werkzeugwechselsystem.

Auch betrifft die Erfindung ein Verfahren zum Wechsel eines Werkzeugs einer materialentfernenden Bearbeitungsanlage, insbesondere zur Herstellung von Dentalteilen, wobei eine Bearbeitungsanlage verwendet wird, die ein hierin beschriebenes Werkzeugwechselsystem aufweist und ein computergestützt, insbesondere automatisiert, erfolgendes Wechseln eines Werkzeugs zwischen einer bearbeitungsanlagenseitigen Werkzeugschnittstelle und einem bearbeitungsanlagenseitigen Werkzeugmagazin erfolgt.

Sämtliche Vorteile, Einzelheiten, Ausführungen und/oder Merkmale des erfindungsgemäßen Werkzeugwechselsystems sind auf das erfindungsgemäße Werkzeug und die erfindungsgemäße materialentfernende Bearbeitungsanlage und auf das erfindungsgemäße Verfahren übertragbar bzw. anzuwenden und umgekehrt.

Die Erfindung ist anhand von Ausführungsbeispielen in den Zeichnungen näher erläutert. Dabei zeigt:
Fig. 1 eine Prinzipdarstellung einer ein mit Werkzeugen bestücktes Werkzeugmagazin umfassende Bearbeitungsanlage gemäß einem Ausführungsbeispiel;
Fig. 2 eine perspektivische Darstellung eines mit Werkzeugen bestückten Werkzeugmagazins gemäß einem Ausführungsbeispiel.

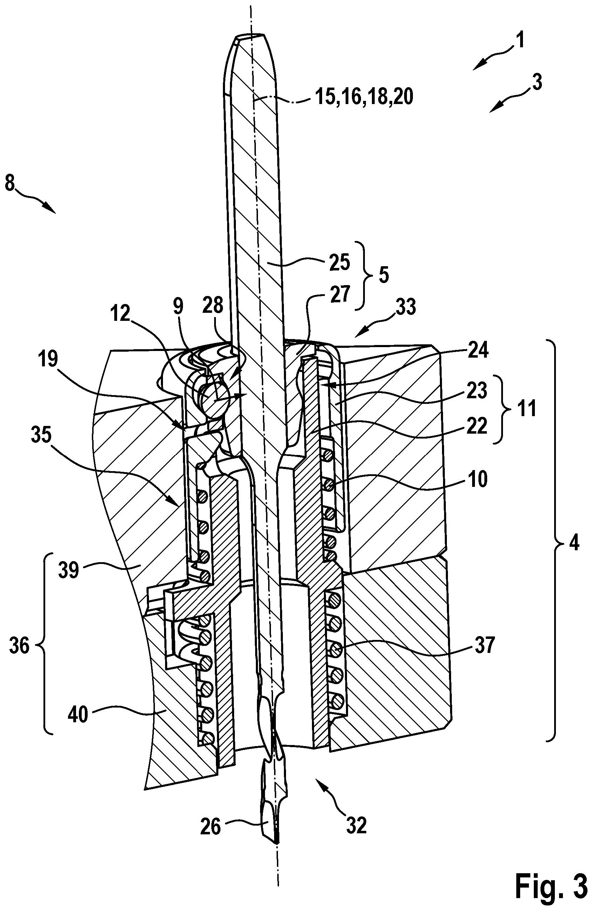

Fig. 3 eine perspektivische Vollschnittdarstellung einer in einem Basiskörper aufgenommenen Aufnahmeeinheit eines Werkzeugmagazins gemäß Anspruch 2;

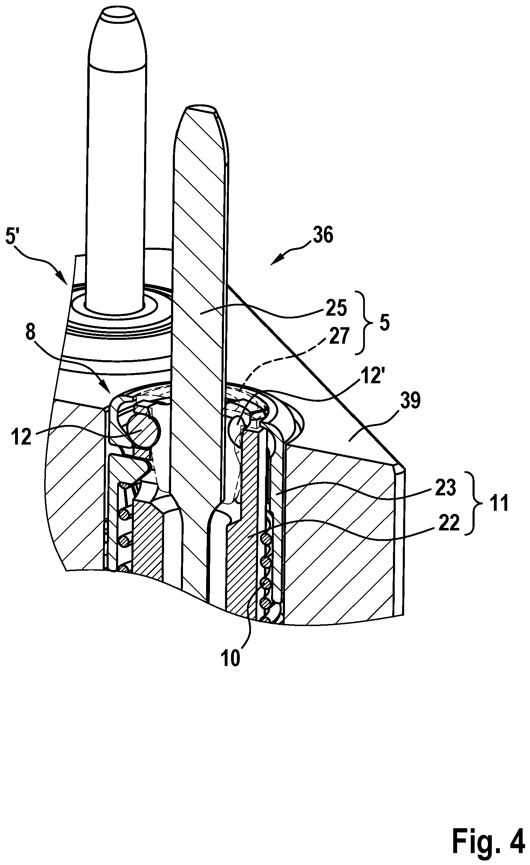

Fig. 4 eine perspektivische Vollschnittdarstellung einer in einem Basiskörper aufgenommenen Aufnahmeeinheit eines Werkzeugmagazins gemäß Anspruch 2, wobei ein Anschlusskörper des Werkzeugs transparent dargestellt ist;

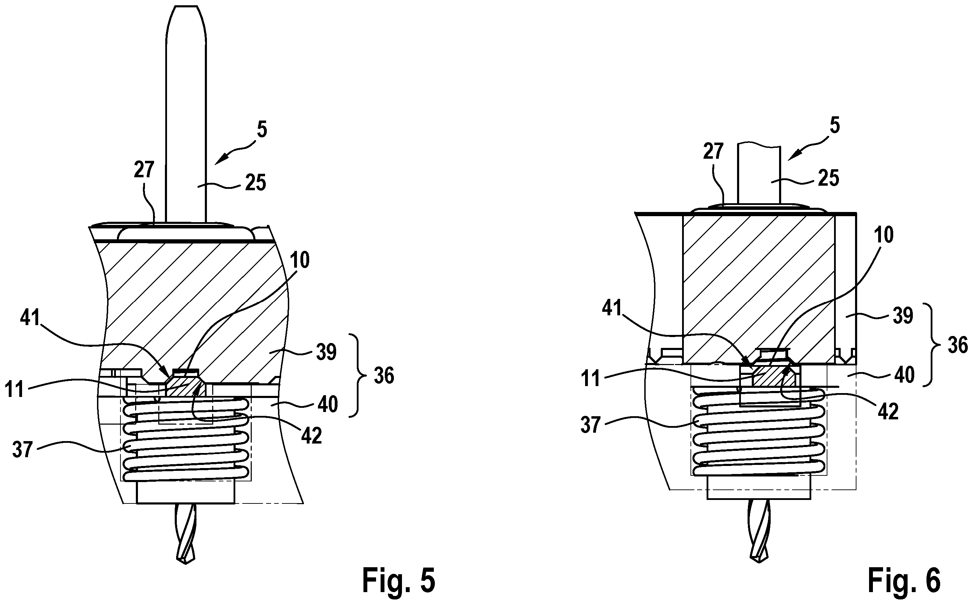

Fig. 5 eine schematische Vollschnittdarstellung eines Werkzeugmagazins entlang der Schnittlinie V-V aus Figur 2, wobei sich das Werkzeug und das Basismittel in einem von äußeren Kräften freien Zustand befinden;
Fig. 6 eine schematische Vollschnittdarstellung eines Werkzeugmagazins nach Anspruch 5, jedoch in einem Zustand, in welchem eine äußere Kraft auf das Werkzeug und auf das das Werkzeug aufnehmende Basismittel einwirkt;

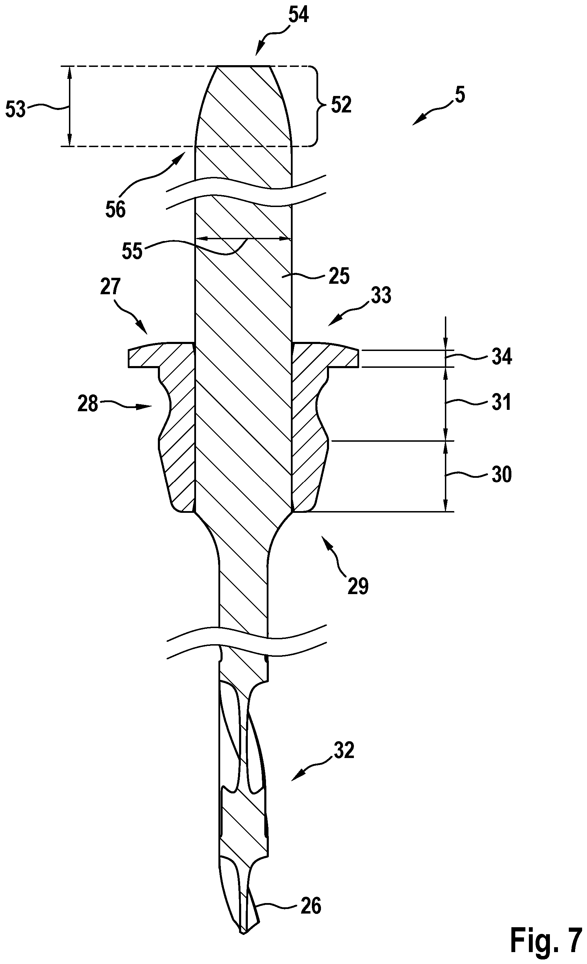

Fig. 7 eine schematische Darstellung eines Abschnitts eines Werkzeugs gemäß einem Ausführungsbeispiel;
Fig. 8a bis 8d schematische Vollschnittdarstellungen, welche unterschiedliche Zustände während es Einsetzens eines Werkzeugs in die Aufnahmeeinheit zeigen;

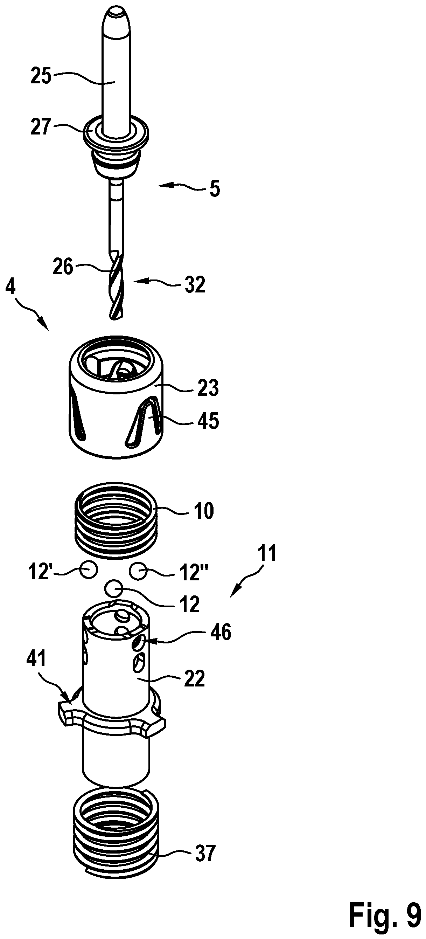

Fig. 9 eine perspektivische Explosionsdarstellung des Werkzeugwechselsystems nach einem Ausführungsbeispiel.

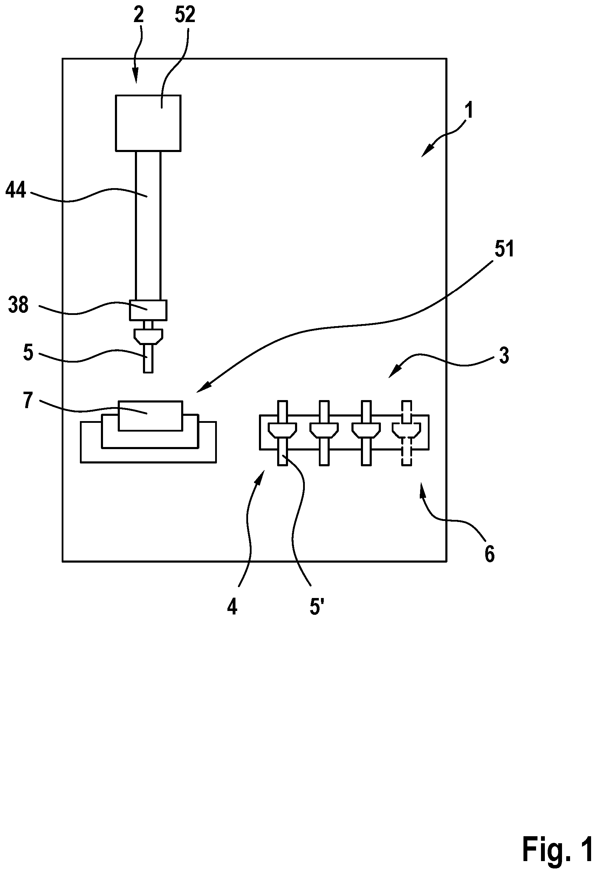

Die Figuren zeigen ein Werkzeugwechselsystem 1 für materialentfernende Bearbeitungsanlagen 2, insbesondere zur Herstellung von Dentalteilen. In Figur 1 ist eine Bearbeitungsanlage 2 gezeigt, die eine Werkzeugschnittstelle 50 zeigt, in der ein Werkzeug 5 aufgenommen ist. Die Werkzeugschnittstelle 50 ist mit einer von einem Motor 52 angetriebenen Antriebswelle 44 bzw. mit einer Motorspindel der Bearbeitungsanlage 2 verbunden. Ferner umfasst die Bearbeitungsanlage 2 ein Werkzeugmagazin 3, wobei durch ein computergestütztes Verfahren die Werkzeugschnittstelle 50 zu dem Werkzeugmagazin 3, zur automatisierten Entnahme eines definierten, dort bevorrateten Werkezeugs 5, 5', verfahrbar ist. Das dort aufgenommene Werkzeug 5 kann sodann zum Arbeitsbereich 51 bewegt und zur Bearbeitung des Werkstücks 7 verwendet werden. In Figur 1 ist der Entnahmeort des in der Werkzeugschnittstelle 50 aufgenommenen Werkzeugs 5 an dem Werkzeugmagazin 3 in gestrichelter Form dargestellt.

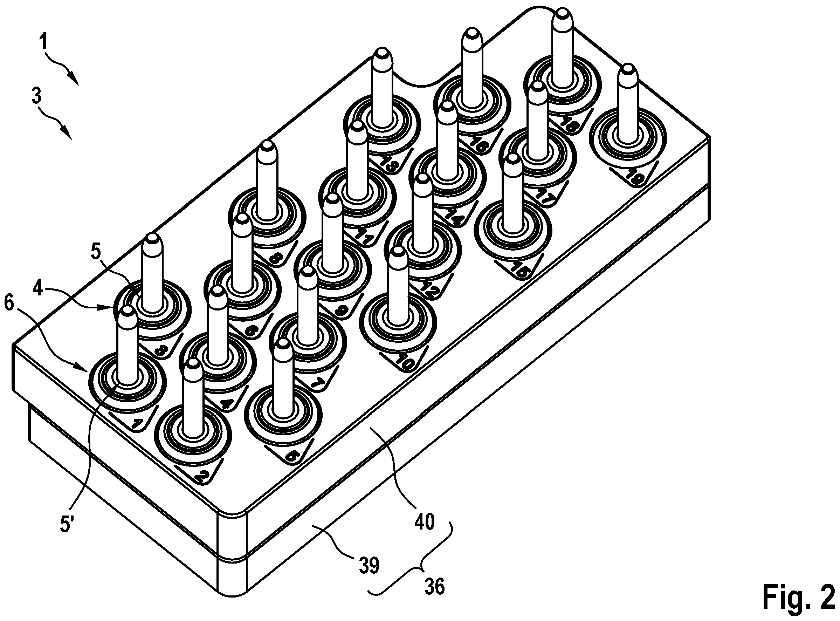

Das Werkzeugwechselsystem 1 umfasst ein Werkzeugmagazin 3 - s. Figur 2 - mit einer ersten Aufnahmeeinheit 4 zur Aufnahme eines ersten materialentfernenden Werkzeugs 5 und mit wenigstens einer zweiten Aufnahmeeinheit 6 zur Aufnahme eines zweiten materialentfernenden Werkzeugs 7. Die wenigstens zwei Aufnahmeeinheiten 4, 6 sind jeweils mit einer Klemmeinrichtung 8 versehen, vermittels der die in die jeweilige Aufnahmeeinheit 4, 6 aufzunehmenden Werkzeuge 5, 5' unter Beaufschlagung mit wenigstens einer Klemmkraft 9 befestigbar sind.

Wenigstens eine Klemmeinrichtung 8 kann beispielsweise zumindest ein Vorspannmittel 10 umfassen, das eingerichtet ist, die wenigstens eine Klemmkraft 9, welche im an der Aufnahmeeinheit 4, 6 aufgenommenen Zustand eines Werkzeugs 5, 5' das Werkzeug 5, 5' beaufschlagt, bereitstellt. Dabei kann das Vorspannmittel 10 mittelbar oder unmittelbar auf das mit der Klemmkraft 9 zu beaufschlagende Werkzeug 5, 5' einwirken. Beispielsweise ist das Vorspannmittel 10 als Druckfeder, insbesondere als Schraubenfeder, ausgebildet. Alternativ kann das Vorspannmittel 10 als Zugfeder ausgebildet sein, welche die Klemmkraft 9 bereitstellt und mittelbar oder unmittelbar auf das Werkzeug 5 einwirkt.

Bevorzugt kann die Klemmeinrichtung 8 ein Basismittel 11 und wenigstens ein Klemmmittel 12, 12', 12" umfassen, wobei das wenigstens eine Klemmmittel 12, 12', 12" beweglich an dem Basismittel 11 gelagert ist und über das wenigstens eine Klemmmittel 12, 12', 12" das an der Aufnahmeeinheit 4, 6 aufgenommene Werkzeugs 5, 5' mit der Klemmkraft 9, insbesondere unmittelbar, beaufschlagbar ist. Beispielsweise ist das Basismittel 11 ein stückig ausgebildet. Alternativ kann das Basismittel 11 mehrstückig ausgebildet sein. In der dargestellten Ausführungsform weist das Basismittel 11 einen, insbesondere in seiner Grundform als Hülse ausgebildeten, Außenkörper 23 sowie einen, insbesondere in seiner Grundform als Hülse ausgebildeten, Innenkörper 22 auf. Innen- und Außenkörper 22, 23 können beispielsweise bewegbar, aber unlösbar miteinander verbunden sein. So können der Außen- und Innenkörper 22, 23 beispielsweise über einen Begrenzungsmechanismus derart miteinander beweglich verbunden sein, dass die Bewegbarkeit in definierten Grenzen vorliegt. Beispielsweise weist der Außenkörper 23 eine, insbesondere eine zur Bewegungsachse sich senkrecht erstreckende bzw. radial sich erstreckende Anschlaghervorhebung 45 auf, die in eine Anschlagaufnahmeausnehmung 46 eingreift derart, dass die Anschlagshervorhebung 45 und die Anschlagaufnahmeausnehmung 46 einen die Bewegung in zumindest eine Richtung begrenzenden Anschlag ausbildet. Vorzugsweise wird die Bewegbarkeit durch die Anschlaghervorhebung 45 und die Anschlagaufnahmeausnehmung 46 in die durch das Vorspannelement 37 gedrängte Bewegungsrichtung begrenzt. D. h. z. B., dass die Vorspannkraft des Vorspannmittels 37 die Anschlaghervorhebung 45 hin zu einem mechanischen Kontakt bzw. Anschlag innerhalb der Anschlagaufnahmeausnehmung 46 drängt bzw. aktiv bewegt. Vorzugsweise sind Innen- und Außenkörper 22, 23 im Zuge eines Zusammensetzens bzw. eines Zusammenbaus nach Art einer BajonettVerbindung zusammenzuführen. D. h. z. B., dass Innen- und Außenkörper 22, 23, zueinander eine phasenweise lineare und phasenweise drehende Relativbewegung ausführen. Beispielsweise ist hierbei eine Anschlaghervorhebung 45 zunächst entlang einer an der Außenfläche des Innenkörpers angeordneten Nut, insbesondere einer Längsnut, entlangzubewegen. Alternativ oder zusätzlich können Innen- und Außenkörper 22, 23 nach Art einer Schnapp-Rast-Verbindung in einen "verlier sicheren" Zustand überführt bzw. miteinander verbunden werden. Hierzu kann die Anschlaghervorhebung 45 nach Art einer Rastnase ausgebildet sein, die währen des Zusammenführens eine temporäre, elastische Bewegung, insbesondere nach radial außen, ausführt und an einem fortgeschrittenen Punkt des Zusammensetzens eine entgegengesetzte Bewegung, z. B. nach radial innen, ausführt bzw. zurückfedert. Um ein derartiges kurzzeitiges Herausbewegen bzw. herausfedern zu unterstützen, kann die Anschlaghervorhebung 45 einen Gleitschräge 49 aufweisen.

Es ist möglich, dass die Klemmeinrichtung 8 ein erstes und wenigstens ein zweites Klemmmittel 12, 12' umfasst, wobei ein an der Aufnahmeeinheit 4, 6 aufgenommenes Werkzeug 5, 5' an einer ersten Seite 13, insbesondere ersten Längsseite, von dem ersten Klemmmittel 12, 12', 12" und das Werkzeug 5, 5' an einer zweiten, von der ersten Seite 13 unterschiedlichen, bevorzugt gegenüberliegenden, Seite 14, insbesondere Längsseite, von dem zweiten Klemmmittel 12, 12', 12" beaufschlagbar ist. Mit anderen Worten wird das Werkzeug 5, 5' von zwei Seiten von jeweils wenigstens einem Klemmmittel 12, 12', 12" beaufschlagt bzw. die Klemmmittel 12, 12', 12" können zwei unterschiedliche Längshälften des Werkzeugs 5, 5' beaufschlagen. Wenn die Klemmmittel 12, 12', 12" in eine senkrecht zur Längsebene verlaufende Ebene projiziert werden, so können diese mit deren Klemmkraftvektoren einen Winkel von z. B. 180° +/- 30° zwischen den Klemmkraftvektoren einschließen. Sofern drei Klemmmittel 12, 12', 12" zum Klemmen des Werkzeugs 5, 5' eingesetzt werden, können die Klemmkraftvektoren jeweils um 120° +/- 15° versetzt, um ein gemeinsames Zentrum, angeordnet sein.

Beispielsweise ist das wenigstens eine Klemmmittel 12, 12', 12", insbesondere sind wenigstens zwei Klemmmittel 12, 12', 12" jeweils, um eine radial zu einer bestimmungsgemäßen Rotationsachse 15 und/oder radial zu einer Haupterstreckungsachse 16 des an der Aufnahmeeinheit 4, 6 aufgenommenen Werkzeugs 5, 5' verlaufenden Bewegungsbahn bewegbar bzw. entsprechend bewegbar an, insbesondere in oder auf, dem Basismittel 11 gelagert.

Vorzugsweise sind wenigstens zwei Klemmmittel 12, 12', 12", insbesondere wenigstens drei Klemmmittel 12, 12', 12", und/oder die Klemmkraftvektoren dieser Klemmmittel 12, 12', 12" in einer gemeinsamen Ebene 17 angeordnet und/oder die wenigstens zwei Klemmmittel 12, 12', 12" sind derart in dem Basismittel 11 gelagert, dass diese, insbesondere ausschließlich, innerhalb der gemeinsamen Ebene bewegbar gelagert sind. Die gemeinsame Ebene 17 kann beispielsweise senkrecht zu einer Haupterstreckungsachse 16 eines bestimmungsgemäß in der Aufnahmeeinheit 4, 6 aufgenommenen Werkzeugs 5, 5' und/oder senkrecht zu einer Haupterstreckungsachse 18 eines zur Aufnahme des Werkzeugs 5, 5' an der Aufnahmeeinheit 4, 6 ausgebildeten Ausnahmekanals 19 ausgerichtet sein. Mit anderen Worten können die Bewegungswege 21 der wenigstens zwei Klemmmittel 12, 12', 12", insbesondere sämtlicher Klemmmittel 12, 12', 12", in einer gemeinsamen Ebene liegend, angeordnet sein.

Das Vorspannmittel 10 kann beispielsweise als Schraubenfeder, insbesondere als Druck- und/oder Zugfeder, ausgebildet sein, wobei eine Mittelachse 20 der Schraubenfeder zu einem Bewegungsweg 21 des Klemmmittels 12, 12', 12" und/oder zu einem Klemmkraftvektor 22 des Klemmmittels 12, 12', 12" einen Winkel α im Bereich von 30° bis 150°, bevorzugt 45° bis 135°, besonders bevorzugt 65° bis 115°, weiter bevorzugt 80° bis 100°, einschließt. Beispielsweise beträgt der Winkel α 90°.

Das Basismittel 11 kann beispielsweise einen mit einem Aufnahmekanal 19 zur Aufnahme des Werkzeugs 5, 5' versehenen Innenkörper 22 und wenigstens einen zumindest abschnittsweise radial außerhalb des Innenkörpers 22 angeordneten Außenkörper 23 umfassen, wobei der Innenkörper 22 und der Außenkörper 23 zueinander bewegbar gelagert sind. Der Innen- und/oder Außenkörper 22, 23 können beispielsweise als Hülsen ausgebildet sein, wobei die den Außenkörper 23 bildende Hülse die Hülse des Innenkörpers radial umgibt. Beispielsweise sind Innen- und/oder Außenkörper als Hohlzylinder, insbesondere als kreisrunde Hohlzylinder, ausgebildet, wobei der Innenkörper in einen Innenraum des Außenkörpers zumindest abschnittsweise eintauchbar und/oder aufnehmbar ist. Beispielsweise durchgreift der Innenkörper 22 den Außenkörper 23 axial zumindest temporär vollständig.

Optional bilden Innen- und Außenkörper 22, 23 einen Aufnahmeraum 24 aus, in welchem ein Vorspannmittel 10 der Klemmeinrichtung 8 angeordnet oder ausgebildet ist, wobei das Vorspannmittel 10 eingerichtet ist, die wenigstens eine Klemmkraft 9, welche im an der Aufnahmeeinheit 4, 6 aufgenommenen Zustand eines Werkzeugs 5, 5' das Werkzeug 5, 5' beaufschlagt, bereitzustellen. Das Vorspannmittel 10 kann beispielsweise verliersicher in dem Aufnahmeraum 24 aufgenommen sein. Vorzugsweise wird durch das Vorspannmittel 10 eine Relativbewegung von Innen- und Außenkörper 22, 23 ausgeführt, wobei diese Relativbewegung durch einen Umlenkabschnitt des Innen- und/oder Außenkörpers 22, 23 aus der Bewegung des Vorspannmittels 10 von einer entlang der bzw. parallel zu der Haupterstreckungsachse 16 des in der Aufnahmeeinheit 4, 6 aufgenommenen Werkzeugs 5, 5' und/oder entlang der bzw. parallel zu der Haupterstreckungsachse 18 des Aufnahmekanals 19 verlaufenden Bewegung zu einer in deren Richtung umgelenkte, bevorzugt senkrecht zur Bewegung des Vorspannmittels erfolgende, Bewegung führt.

In Abhängigkeit einer relativen Position von Innen- und Außenkörper 22, 23 kann beispielsweise ein möglicher Bewegungsraum bzw. ein durch den Innen- und Außenkörper 22, 23 definierter bzw. vorgegebener Bewegungsraum des wenigstens einen Klemmmittels 12, 12', 12" und/oder die Position des wenigstens einen, insbesondere sämtlicher, Klemmmittel 12, 12', 12" zumindest einer Aufnahmeeinheit 4, 6 veränderbar sein.

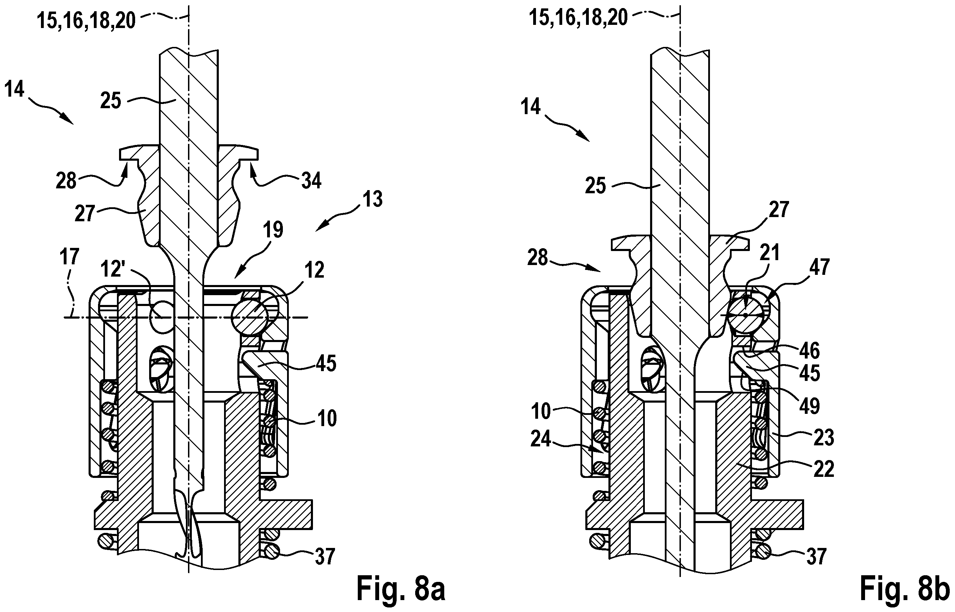

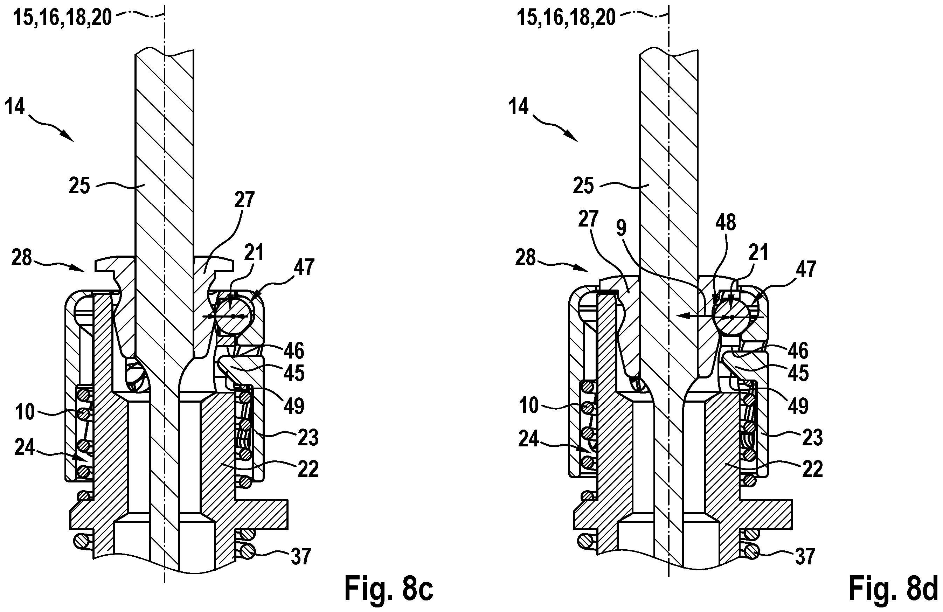

In den Figuren 8a bis 8d sind die unterschiedlichen Positionen von Innen- und Außenkörper 22, 23 sowie die im Zusammenhang mit der Position des Werkzeugs innerhalb des Aufnahmekanals 19 der Aufnahmeeinheit 4, 6 dargestellt. Figuren 8a und 8b zeigen frühe Zeitpunkte während des Einsetzens eines Werkzeugs 5, 5' in den Aufnahmekanal 19, hierbei kommt ein Zentrierabschnitt 30 des Anschlusskörpers 27 des Werkzeugs 5, 5' in Kontakt mit dem wenigstens einen, insbesondere als Kugel ausgebildeten, Klemmmittel 12, 12', 12" und drückt dieses mit fortschreitendem Eindringen des Werkzeugs 5, 5' nach außen, insbesondere nach radial außen. Die hierbei von dem Werkzeug 5, 5' eingebrachte Druckkraft muss sowohl die Reibwiderstände des wenigstens einen Klemmmittels 12, 12', 12" als auch eine von dem Vorspannelement 37 bereitgestellte Vorspannkraft überdrückt werden. In diesem Fall führt der Außenkörper 23, bis das Klemmmittel 12, 12', 12" einen Scheitelpunkt des Zentrierabschnitts 30 bzw. einen Übergangspunkt zwischen dem Zentrierabschnitt 30 und dem Anschlusskontaktabschnitt 28 erreicht hat, eine nach unten bzw. in Einführrichtung des Werkzeugs gerichtete Bewegung relativ zu dem Innenkörper 22 aus. Gleichzeitig führt das wenigstens einen Klemmmittel 12, 12', 12" eine nach außen gerichtete Bewegung aus. Von dem Scheitelpunkt - s. Figur 8c - bis zum Erreichen des Endpunkts für die Bewegung des Werkzeugs 5, 5' in die Aufnahmeeinheit 4, 6 führt das Klemmmittel (12, 12', 12") eine nach innen, insbesondere nach radial innen, gerichtete Bewegung aus und taucht zumindest abschnittsweise in die anschlusskörperseitige Ausnehmung ein, s. Figur 8d. Es kann sich als vorteilhaft erweisen, wenn das zumindest eine, insbesondere als Kugel ausgebildete, Klemmmittel 12, 12', 12" nicht den tiefsten Punkt bzw. den Punkt mit einem radial kleinsten Abstand zu einer Mittelachse des Innenkörpers 22 erreicht, damit die Endlage eine vorspannmittelseitige Vorspannkraft über das Klemmmittel 12, 12', 12" und dem Anschlusskontaktabschnitt 27 in eine in Einführrichtung weisende Richtung vorspannt. Dies wird - wie in Figur 8d ersichtlich - dadurch erreicht, dass vermittels des mit dem Innenkörper 22 auf Anschlag befindlichen Anschlagabschnitts 27 eine weitere Bewegung des Werkzeugs 5, 5' in Einführrichtung verhindert wird, jedoch das Vorspannmittel 10 über den Außenkörper 23 und den Innenkörper 22, als Widerlager, und die in eine Richtung entgegen der Einführrichtung nach radial innen gerichtete Schräge, das Klemmmittel 12, 12', 12" nach radial innen und über die Schräge die Druckkraft des Klemmmittel 12, 12', 12" in Richtung der Einführrichtung vorspannt. Mit anderen Worten liegt in der Endlage des in der Aufnahmeeinheit 4, 6 aufgenommenen Werkzeugs ein zumindest teilweise nach radial innen weisender Spalt 48 zwischen dem wenigstens eine Klemmmittel 12, 12', 12" und der konkaven Ausnehmung des Anschlusskontaktabschnitts 28 vor.

Durch diesen Kontakt und die konische Form des Zentrierabschnitts 30 kann eine Zentrierung des Werkzeugs 5, 5' relativ zu der Aufnahmeeinheit 4, 6 erfolgen.

Beispielsweise kann wenigstens ein materialentfernendes Werkzeug 5, 5' einen mit zumindest eine Bearbeitungsstruktur, insbesondere eine Schneide 26, umfassenden Grundkörper 25 sowie einen radial von dem Grundkörper 25 abstehenden Anschlusskörper 27 umfassen. Im an, d. h. z. B. in, der Aufnahmeeinheit 4, 6 aufgenommenen Zustand des Werkzeugs 5, 5', kann beispielsweise insbesondere ausschließlich, der Anschlusskörper 27 in Kontakt mit der Aufnahmeeinheit 4, 6 stehen. Der Anschlusskörper 27 kann materialeinheitlich und/oder einstückig mit dem Grundkörper 25 ausgebildet sein. Alternativ sind Anschlusskörper 27 und Grundkörper 25 jeweils separate Bauteile, die miteinander befestigt sind, beispielsweise kann eine kraft- und/oder form- und/oder stoffschlüssige Befestigung von Anschlusskörper 27 und Grundkörper 25 vorliegen.

Der Anschlusskörper 27 kann beispielsweise einen Anschlusskontaktabschnitt 28 umfassen, der eine zumindest abschnittsweise, bevorzugt überwiegende, besonders bevorzugt vollständig, mit dem Klemmmittel 12, 12', 12" korrespondierende Geometrie aufweist. Beispielsweise kann der Anschlusskontaktabschnitt 28 eine zumindest abschnittsweise konkave Form und das Klemmmittel 12, 12', 12" eine zumindest abschnittsweise konvexe Form aufweisen. In der dargestellten beispielhaften Ausführungsform weist das Klemmmittel 12, 12', 12" die Form einer Kugel auf.

Der Anschlusskörper 27 weist beispielsweise (a) einen, insbesondere eine Kegelform oder Kegelstumpfform, an einem axialen Endbereich 29 ausgebildeten Zentrierabschnitt 30 auf. Alternativ oder zusätzlich kann der Anschlusskörper 27 einen, in einem axialer Mittelbereich 31 des Anschlusskörpers 27 ausgebildeten Anschlusskontaktabschnitt 28 und/oder einen, an einer einem Arbeitsabschnitt 32 des Grundkörpers 25 abgewandten Seite 33 angeordneten oder ausgebildeten und eine im Vergleich zum Anschlusskontaktabschnitt 28 sich radial vergrößerten Anschlagabschnitt 34 aufweisen. Bei einem Anschlusskontaktabschnitt 28 der einen Zentrierabschnitt 30, einen Mittelbereich 31 sowie einen Anschlagabschnitt 34 aufweist, können während des Einsetzens des Werkzeugs 5, 5' sowohl ein vereinfachtes anfängliches Zentrieren vermittels des Zentrierabschnitts 30, ein Klemmkraftbeaufschlagen mit dem Mittelbereich 31 sowie eine Begrenzung der axialen Zuführbewegung durch den Anschlagabschnitt 34 erfolgen.

Es ist hierbei vorteilhaft, dass der Anschlagabschnitt 34 auf einer ersten Seite des Anschlusskörpers 27 und der Zentrierabschnitt 30 auf einer der ersten Seite gegenüberliegenden Seite des Anschlusskörpers 27 angeordnet oder ausgebildet ist. Vorzugsweise ist der Anschlagabschnitt 34 auf einer der Bearbeitungsstruktur des werkzeugseitigen Grundkörpers 25 abgewandten Seite des Anschlusskörpers 27 ausgebildet oder angeordnet. Es ist möglich, dass (a) Zentrierabschnitt 30 und Anschlusskontaktabschnitt 28 oder (b) Zentrierabschnitt 30 und Anschlagabschnitt 34 oder (c) Anschlusskontaktabschnitt 28 und Anschlagabschnitt 34 oder (d) Zentrierabschnitt 30 und Anschlusskontaktabschnitt 28 und Anschlagabschnitt 34, durch materialeinheitlich und/oder einstückige Abschnitte des Anschlusskörpers 27 und/oder des Grundkörpers 25 ausgebildet sind.

Das Werkzeugmagazin 3 kann beispielsweise einen mit wenigstens einer Aufnahmeausnehmung 35 versehenen Basiskörper 36 aufweisen, wobei wenigstens eine Aufnahmeeinheit 4, 6 bewegbar zumindest abschnittsweise in die Aufnahmeausnehmung 35 aufnehmbar oder aufgenommen ist, wobei die wenigstens eine Aufnahmeeinheit 4, 6 vermittels wenigstens eines Vorspannelements 37 in eine definierte Position vorgespannt oder vorspannbar ist. Beispielsweise bildet das Vorspannelement 37 eine Vorspannkraft aus, die in eine Richtung ausgerichtet ist, welche einer Richtung einer Einführkraft des in die Aufnahmeeinheit 4, 6 einzusetzenden Werkzeugs 5, 5' entgegenwirkt.

Beispielsweise ist die wenigstens eine Aufnahmeeinheit 4, 6 linearbeweglich und kippbar an dem Basiskörper 36 gelagert, vorzugsweise ist die wenigstens eine Aufnahmeeinheit 4, 6 in einem Bereich von 0,1 mm bis 10 mm, bevorzugt 0,2 mm bis 5,0 mm, besonders bevorzugt 0,3 mm bis 3,0 mm, höchst bevorzugt 0,3 mm bis 1,5 mm, linearbeweglich und/oder um einen Winkel β im Bereich von 0,1° bis 20,0° , bevorzugt 0,2° bis 15,0°, besonders bevorzugt 0,3° bis 10,0°, weiter bevorzugt 0,4 bis 6,0°, höchst bevorzugt 0,4° bis 5,0°, um eine Mittellängsachse der Aufnahmeeinheit 4, 6 kippbar.

Die wenigstens zwei basismittelseitigen Kontaktbereiche 41 und/oder die wenigstens zwei basiskörperseitigen Gegenkontaktbereiche 42 können vorzugsweise, insbesondere jeweils, eine Zentrierstruktur 43 aufweisen, sodass aufgrund der Zentrierstruktur 43 und durch die Vorspannkraft des Vorspannelements 37 das Basismittel 11 in eine definierte Position und/oder Ausrichtung relativ zu dem Basiskörper 36 gedrängt bzw. geführt wird. Diese definierte Position und/oder Ausrichtung von Aufnahmeeinheit 4, 6 und Basiskörper 36 kann beispielsweise zu einer vertikal verlaufenden Ausrichtung der Haupterstreckungsachse bzw. Längsachse des in dem Basismittel 11 (Aufnahmeeinheit 4, 6) aufgenommenen Werkzeugs 5, 5' zu einer Haupterstreckungsachse bzw. Längsachse des Werkzeugmagazins 3 und/oder des Basiskörper 36 führen. Die Zentrierstruktur 43 kann beispielsweise derart ausgebildet sein, dass ein Kontaktpartner, z. B. ein basismittelseitiger Kontaktbereich 41, als Hervorhebung und der Gegenkontaktpartner, z. B. ein basiskörperseitiger Gegenkontaktbereich 42, eine Ausnehmung oder eine ebene Fläche zur Aufnahme bzw. zum Anlegen der Hervorhebung aufweist. Innerhalb der Ausnehmung kann die Hervorhebung und die Ausnehmung derart in Kontakt stehen, dass eine definierte Kippbarkeit dann vorliegt, wenn eine einen vordefinierten Schwellwert überschreitende, quer auf ein in dem Basismittel 11 aufgenommenen Werkzeugs 5, 5' einwirkenden Kraft anliegt. So kann ausgehend von einer derartigen Auslenkung, durch die Zentrierstruktur 43 und die vorspannelementseitige Vorspannkraft das Basismittel 11 wieder in eine vordefinierte, insbesondere senkrecht zur Haupterstreckungsebene des Werkzeugmagazins 3 ausgerichtete Grundposition zurückgeführt werden. Auch im Fall eines als Ebene ausgebildeten Gegenkontaktpartners, kann der als Hervorhebung ausgebildete Kontaktbereich 41 flächig und/oder punktförmige und/oder linienförmig mit dem Gegenkontaktpartner, insbesondere einem Gegenkontaktbereich 42 in Kontakt stehen. Hierbei wird ebenso durch die Vorspannkraft des Vorspannelements 37, eine Auslenkung aus einer vordefinierten (Grund-)Position des Werkzeugs 5, 5', nur unter Überwindung dieser Vorspannkraft ermöglicht und/oder bei Auslenkung des Werkzeugs 5, 5' aus einer vordefinierten Position (z. B. bei Verkippen aus der vordefinierten Position) vermittels der Vorspannkraft und des Zusammenwirkens von Kontaktbereich 41 und Gegenkontaktbereich 42 eine aktive Bewegung des Werkzeugs 5, 5' bzw. des das Werkzeug 5, 5' aufnehmenden Basismittels 11 in die vordefinierte (Grund-)Position ausgeführt. Dadurch wird eine reproduzierbare Ausrichtung des Werkzeugs 5, 5' an dem Werkzeugmagazin 3 erreicht, selbst dann, wenn eine vorherige Zuführung dieses Werkzeugs 5, 5' eigentlich zu einer Schrägstellung des Werkzeugs 5, 5' an dem Werkzeugmagazin 3 geführt hätte. Hierdurch kann das Greifen und Einsetzen des Werkzeugs 5, 5' toleranter ausgeführt werden, da die Zentrierstruktur 43 und das Vorspannelement 37 eine korrigierend auf die Ausrichtung des Werkzeugs 5, 5' an dem Werkzeugmagazin 3 einwirkende Korrekturfunktion ausführen.

Neben dem Werkzeugwechselsystem 1 betrifft die Erfindung ein Werkzeug 5, 5' für eine materialentfernende Bearbeitungsanlage 2, insbesondere zur Herstellung von Dentalteilen, wobei die Bearbeitungsanlage 2 ein hierin beschriebenes Werkzeugwechselsystem 1 aufweist und das Werkzeug 5, 5', in wenigstens eine Aufnahmeeinheit 4, 6 des Werkzeugwechselsystem 1 aufnehmbar ist. Ebenso betrifft die Erfindung eine materialentfernende Bearbeitungsanlage 2, insbesondere zur Herstellung von Dentalteilen, umfassend ein hierin beschriebenes Werkzeugwechselsystem 1.

Das Werkzeug 5, 5' kann beispielsweise eine Anschlussstelle, insbesondere einen Anschlusskörper 27, zur Befestigung des Werkzeugs 5, 5' an dem Werkzeugmagazin 3 bzw. an einer werkzeugmagazinseitigen Aufnahmeeinheit 4, 6 der Bearbeitungsanlage 2, insbesondere einen Anschlusskörper 27, aufweisen und an seinem einer Bearbeitungsstruktur, insbesondere einer Schneide 26, des Werkzeugs 5, 5' abgewandten Ende 54 einen Übergangsbereich 52 aufweisen. Dieser Übergangsbereich 52 kann sich von dem freien, der Bearbeitungsstruktur abgewandten Ende 54 in Richtung der Bearbeitungsstruktur erstrecken. Dieses Ende wird durch eine Spannzange der Bearbeitungsanlage 2 gegriffen oder an diesem Bereich wird zumindest ein Bestandteil der Spannzange vorbei- bzw. entlanggeführt. Um ein zuverlässiges Greifen, zu ermöglichen, insbesondere ein Greifen, das in einem hohen Grad tolerant gegenüber der an das Werkzeugende computergestützt heranzufahrenden Spannzange ist, kann dieser Endbereich einen langgezogenen und/oder sanften Übergang (Übergangsbereich 52) aufweisen. Auf diese Weise kann eine Zentrierung innerhalb der Spannzange bzw. relativ zur Spannzange erfolgen. Dies auch dadurch gestützt bzw. dadurch ermöglicht, dass das Werkzeug in der Aufnahmeeinheit 4, 6 mit einer Klemmkraft 9 vorgespannt aufgenommen ist und innerhalb definierter Grenzen eine Kippbewegung gegen die Klemmkraft 9 ausführen kann. Damit wird die Gefahr eines Verkantens und/oder eines fehlerhaften Greifens vermittels der Spannzange verhindert oder reduziert.

Der Übergangsbereich 52 kann eine Länge 53 aufweisen, die einem Länge-53-zu-Durchmesser-55-Verhältnis von 0,25 bis 1,50, bevorzugt 0,35 bis 1,30, besonders bevorzugt 0,40 bis 1,13, weiter bevorzugt 0,50 bis 1,04, höchst bevorzugt 0,59 bis 1,00 entspricht. Alternativ oder zusätzlich kann der Übergangsbereich 52 eine Länge 53 aufweisen, die mindestens ein Länge-53-zu-Durchmesser-55-Verhältnis von 0,25, bevorzugt 0,35, besonders bevorzugt 0,40, weiter bevorzugt 0,59, höchst bevorzugt 0,80, aufweist. Für die jeweiligen Länge 53 zu Durchmesser 55 Verhältnisse wird sich hierbei auf den maximalen Durchmesser 55 des von der Anschlussstelle, insbesondere von dem Anschlusskörper 27 (ab dem Anschlusskörper 27 ohne/exklusiv des Anschlusskörpers 27) zu dem der Bearbeitungsstruktur abgewandten Ende 54 des Werkzeugs 5, 5' erstreckende Bereich bezogen. Beispielsweise kann der betrachtete Durchmesser 55 der maximale Durchmesser 55 des Grundkörpers 25 des Werkzeugs 5, 5' sein. So ist es beispielsweise möglich, dass die Länge 53 des Übergangsbereichs 52 1,0 mm bis 10,0 mm, bevorzugt 1,5 mm bis 6,0 mm, besonders bevorzugt 2,0 mm bis 5,0 mm, weiter bevorzugt 3,0 mm bis 4,0 mm, beträgt. Alternativ oder zusätzlich kann die Länge 53 des Übergangsbereichs 52 mindestens 0,1 mm, bevorzugt 0,25 mm, besonders bevorzugt 0,5 mm, weiter bevorzugt 1,0 mm, höchst bevorzugt 2,0 mm, ferner bevorzugt 3,0 mm, betragen.

Es ist möglich, dass der Übergangsbereich 52 eine, insbesondere ausschließlich, konvexe und/oder eine, insbesondere ausschließlich, konkave Form aufweist. Damit kann zwischen dem freien Ende 54 bis zum zur Bearbeitungsstruktur zugewandten Ende 56 eine, insbesondere ausschließlich, konvexe und/oder eine, insbesondere ausschließlich, konkave Form aufweisen.

Ferner sind auch die Verfahrensaspekte des Werkzeugwechselsystems 1 bzw. einer ein hierin beschriebenes Werkzeugmagazin 3 umfassenden Bearbeitungsanlage 2 Gegenstand der Erfindung. Das Verfahren dient zum Wechsel eines Werkzeugs 5, 5' einer materialentfernenden Bearbeitungsanlage 2, insbesondere einer Bearbeitungsanlage 2 zur Herstellung von Dentalteilen, wobei eine Bearbeitungsanlage 2 verwendet wird, die ein hierin beschriebenes Werkzeugwechselsystem 1 aufweist und ein computergestützt, insbesondere automatisiert, erfolgendes Wechseln eines Werkzeugs 5, 5' zwischen einer bearbeitungsanlagenseitigen Werkzeugschnittstelle 38 einem bearbeitungsanlagenseitigen Werkzeugmagazin 3 erfolgt.

### BEZUGSZEICHENLISTE

- 1: Werkzeugwechselsystem
- 2: Bearbeitungsanlage
- 3: Werkzeugmagazin
- 4: erste Aufnahmeeinheit
- 5, 5': Werkzeug
- 6: zweite Aufnahmeeinheit
- 7: Werkstück
- 8: Klemmeinrichtung
- 9: Klemmkraft
- 10: Vorspannmittel
- 11: Basismittel von 8
- 12, 12', 12": Klemmmittel von 8
- 13: erste Seite
- 14: zweite Seite
- 15: Rotationsachse von 5, 5'
- 16: Haupterstreckungsachse von 5, 5'
- 17: Ebene
- 18: Haupterstreckungsachse von 19
- 19: Aufnahmekanal von 4, 6
- 20: Mittelachse von 10
- 21: Bewegungsweg von 12, 12', 12"
- 22: Innenkörper von 11
- 23: Außenkörper von 11
- 24: Aufnahmeraum zwischen 22 und 23 für 10
- 25: Grundkörper von 5
- 26: Schneide von 5
- 27: Anschlusskörper von 5
- 28: Anschlusskontaktabschnitt von 27
- 29: Endbereich von 30
- 30: Zentrierabschnitt von 27
- 31: axialer Mittelbereich von 27
- 32: Arbeitsabschnitt von 25
- 33: Seite von 27 (abgewandt von 32)
- 34: Anschlagabschnitt von 27
- 35: Aufnahmeausnehmung von 36
- 36: Basiskörper von 3
- 37: Vorspannelement
- 38: Werkzeugschnittstelle
- 39: erster Basisteilkörper von 36 (oberer)
- 40: weiterer Basisteilkörper von 36 (unterer)
- 41: Kontaktbereich von Basismittel 11
- 42: Gegenkontaktbereich von Basiskörper 36, insbesondere von 39
- 43: Zentrierstruktur
- 44: Antriebswelle
- 45: Anschlaghervorhebung
- 46: Anschlagaufnahmeausnehmung
- 47: Umlenkabschnitt von 22, 23
- 48: Spalt zwischen 12, 12', 12" und 28
- 49: Gleitschräge von 45
- 50: Werkzeugschnittstelle
- 51: Arbeitsbereich
- 52: Übergangsbereich von 5, 5'
- 53: Länge von 52
- 54: freies Ende von 5, 5'
- 55: Durchmesser von 25
- 56: Ende von 52 (der Bearbeitungsstruktur zugewandt)

## Patentansprüche

1. Werkzeugwechselsystem (1) für eine materialentfernende Bearbeitungsanlage (2), insbesondere zur Herstellung von Dentalteilen, umfassend
- ein Werkzeugmagazin (3) mit einer ersten Aufnahmeeinheit (4) zur Aufnahme eines ersten materialentfernenden Werkzeugs (5) und mit wenigstens einer zweiten Aufnahmeeinheit (6) zur Aufnahme des ersten und/oder eines zweiten materialentfernenden Werkzeugs (5, 5'), wobei
- die wenigstens zwei Aufnahmeeinheiten (4, 6) jeweils eine Klemmeinrichtung (8) aufweisen, vermittels der die in die jeweilige Aufnahmeeinheit (4, 6) aufzunehmenden Werkzeuge (5, 5') unter Beaufschlagung mit wenigstens einer Klemmkraft (9) befestigbar sind.

2. Werkzeugwechselsystem (1) nach Anspruch 1, **dadurch gekennzeichnet, dass** wenigstens eine Klemmeinrichtung (8) ein Vorspannmittel (10) umfasst, das eingerichtet ist, die wenigstens eine Klemmkraft (9) bereitzustellen, welche ein in der Aufnahmeeinheit (4, 6) aufgenommenes Werkzeug (5, 5') beaufschlagt.

3. Werkzeugwechselsystem (1) nach Anspruch 1 oder 2, **dadurch gekennzeichnet, dass** die Klemmeinrichtung (8) ein Basismittel (11) und wenigstens ein Klemmmittel (12, 12', 12") umfasst, wobei das wenigstens eine Klemmmittel (12, 12', 12") beweglich an dem Basismittel (11) gelagert ist und über das wenigstens eine Klemmmittel (12, 12', 12") das an der Aufnahmeeinheit (4, 6) aufgenommene Werkzeugs (5, 5') mit der Klemmkraft (9), insbesondere unmittelbar, beaufschlagbar ist.

4. Werkzeugwechselsystem (1) nach Anspruch 3, **dadurch gekennzeichnet, dass** die Klemmeinrichtung (8) ein erstes und wenigstens ein zweites Klemmmittel (12, 12') umfasst, wobei ein an der Aufnahmeeinheit (4, 6) aufgenommenes Werkzeug (5, 5') an seiner nach radial außen weisenden Oberfläche von dem wenigstens einen Klemmmittel (12, 12', 12") beaufschlagbar ist, bevorzugt beaufschlagt ein erstes Klemmmittel (12) das in die Aufnahmeeinheit (4, 6) aufgenommene Werkzeug 5, 5') an einem ersten, nach radial außen weisenden Oberflächenabschnitt und ein zweites Klemmmittel (12') dasselbe Werkzeug (5, 5') an einem zweiten, nach radial außen weisenden Oberflächenabschnitt.

5. Werkzeugwechselsystem (1) nach Anspruch 3 oder 4, **dadurch gekennzeichnet, dass** wenigstens zwei Klemmmittel (12, 12', 12"), insbesondere wenigstens drei Klemmmittel (12, 12', 12"), in einer gemeinsamen Ebene (17) bewegbar angeordnet sind, bevorzugt ist die gemeinsame Ebene (17) senkrecht zu einer Haupterstreckungsachse (16) eines bestimmungsgemäß in der Aufnahmeeinheit (4, 6) aufgenommenen Werkzeugs (5, 5') und/oder senkrecht zu einer Haupterstreckungsachse (18) eines zur Aufnahme des Werkzeugs (5, 5') an der Aufnahmeeinheit (4, 6) ausgebildeten Ausnahmekanals (19) ausgerichtet.

6. Werkzeugwechselsystem (1) nach einem der Ansprüche 2 bis 5, **dadurch gekennzeichnet, dass** das Vorspannmittel (10) als Schraubenfeder ausgebildet ist und eine Mittelachse (20) der Schraubenfeder zu einem Bewegungsweg (21) des Klemmmittels (12, 12', 12") und/oder zu einem Klemmkraftvektor (22) des Klemmmittels (12, 12', 12") einen Winkel α im Bereich von 30° bis 150°, bevorzugt 45° bis 135°, besonders bevorzugt 65° bis 115°, weiter bevorzugt 80° bis 100°, einschließt, höchst bevorzugt beträgt der Winkel α 90°.

7. Werkzeugwechselsystem (1) nach einem der Ansprüche 3 bis 6, **dadurch gekennzeichnet, dass** das Basismittel (11) einen mit einem Aufnahmekanal (19) zur Aufnahme des Werkzeugs (5, 5') versehenen Innenkörper (22) und wenigstens einen zumindest abschnittsweise, insbesondere radial, außerhalb des Innenkörpers (22) angeordneten Außenkörper (23) umfasst, wobei der Innenkörper (22) und der Außenkörper (23) zueinander bewegbar gelagert sind, bevorzugt bilden Innen- und Außenkörper (22, 23) einen Aufnahmeraum (24) aus, in welchem wenigstens eine Vorspannmittel (10) der Klemmeinrichtung (8) angeordnet oder ausgebildet ist, wobei das Vorspannmittel (10) eingerichtet ist, die wenigstens eine Klemmkraft (9), welche im an der Aufnahmeeinheit (4, 6) aufgenommenen Zustand eines Werkzeugs (5, 5') das Werkzeug (5, 5') beaufschlagt, bereitzustellen.

8. Werkzeugwechselsystem (1) nach einem der vorhergehenden Ansprüche, **gekennzeichnet durch** wenigstens ein materialentfernendes Werkzeug (5, 5'), das einen zumindest eine Bearbeitungsstruktur, insbesondere eine Schneide (26), aufweisenden Grundkörper (25) sowie einen radial von dem Grundkörper (25) abstehenden Anschlusskörper (27) umfasst, wobei der Anschlusskörper (27) eingerichtet ist, im an der Aufnahmeeinheit (4, 6) aufgenommenen Zustand des Werkzeugs (5, 5'), insbesondere ausschließlich, über den Anschlusskörper (27) mit der Aufnahmeeinheit (4, 6) in Kontakt zu stehen.

9. Werkzeugwechselsystem (1) nach Anspruch 8, **dadurch gekennzeichnet, dass** der Anschlusskörper (27) einen Anschlusskontaktabschnitt (28) umfasst, der eine mit dem Klemmmittel (12, 12', 12") korrespondierende Geometrie aufweist, insbesondere weist der Anschlusskontaktabschnitt (28) eine konkave Form und das Klemmmittel (12, 12', 12") eine konvexe Form auf.

10. Werkzeugwechselsystem (1) nach Anspruch 8 oder 9, **dadurch gekennzeichnet, dass** der Anschlusskörper (27)
- einen, insbesondere eine Kegelform oder Kegelstumpfform, an einem axialen Endbereich (29) ausgebildeten Zentrierabschnitt (30) und/oder
- einen, in einem axialer Mittelbereich (31) des Anschlusskörpers (27) ausgebildeten Anschlusskontaktabschnitt (28) und/oder
- einen, an einer einem Arbeitsabschnitt (32) des Grundkörpers (25) abgewandten Seite (33) angeordnet oder ausgebildet und eine im Vergleich zum Anschlusskontaktabschnitt (28) sich radial vergrößerten Anschlagabschnitt (34)
aufweist.

11. Werkzeugwechselsystem (1) nach einem der vorhergehenden Ansprüche, **dadurch gekennzeichnet, dass** das Werkzeugmagazin (3) einen mit wenigstens einer Aufnahmeausnehmung (35) versehenen Basiskörper (36) aufweist, wobei wenigstens eine Aufnahmeeinheit (4, 6) bewegbar zumindest abschnittsweise in die Aufnahmeausnehmung (35) aufnehmbar oder aufgenommen ist, wobei die wenigstens eine Aufnahmeeinheit (4, 6) vermittels wenigstens eines Vorspannelements (37) in eine definierte Position vorgespannt ist, bevorzugt bildet das Vorspannelement (37) eine Vorspannkraft aus, die in eine Richtung ausgerichtet ist, welche einer Richtung einer Einführkraft des in die Aufnahmeeinheit (4, 6) einzusetzenden Werkzeugs 5, 5' entgegenwirkt.

12. Aufnahmeeinheit (4) für ein Werkzeugwechselsystem (1) nach einem der vorhergehenden Ansprüche.

13. Werkzeug (5, 5') für eine materialentfernende Bearbeitungsanlage (2), insbesondere zur Herstellung von Dentalteilen, wobei die Bearbeitungsanlage (2) ein Werkzeugwechselsystem (1) nach einem der Ansprüche 1 bis 12 aufweist und das Werkzeug (5, 5'), in wenigstens eine Aufnahmeeinheit (4, 6) des Werkzeugwechselsystem (1) aufnehmbar ist.

14. Werkzeug (5, 5') nach Anspruch 13, **dadurch gekennzeichnet, dass** das Werkzeug (5, 5') eine Anschlussstelle, insbesondere einen Anschlusskörper (27), zur Befestigung an einem Werkzeugmagazin (3), insbesondere zur Befestigung an einer werkzeugmagazinseitigen Aufnahmeeinheit (4, 6), aufweist, und an seinem einer Bearbeitungsstruktur des Werkzeugs (5, 5') abgewandten Ende (54) einen Übergangsbereich (52) aufweist,
- der eine Länge (53) aufweist, die einem Länge-(53)-zu-Durchmesser (55)-Verhältnis von 0,25 bis 1,50, bevorzugt 0,35 bis 1,30, besonders bevorzugt 0,40 bis 1,13, weiter bevorzugt 0,50 bis 1,04, höchst bevorzugt 0,59 bis 1,00, entspricht, und/oder
- der eine Länge (53) aufweist, die mindestens ein Länge-(53)-zu Durchmesser-(55)-Verhältnis von 0,25, bevorzugt 0,35, besonders bevorzugt 0,40, weiter bevorzugt 0,59, höchst bevorzugt 0,80, aufweist, wobei sich das Länge-(53)-zu-Durchmesser-(55)-Verhältnis auf den maximalen Durchmesser (55) des von der Anschlussstelle, insbesondere von dem Anschlusskörper (27), zu dem der Bearbeitungsstruktur abgewandten Ende (54) des Werkzeugs (5, 5') erstreckenden Bereich bezieht.

15. Materialentfernende Bearbeitungsanlage (2), insbesondere zur Herstellung von Dentalteilen, umfassend ein Werkzeugwechselsystem (1) nach einem der Ansprüche 1 bis 12.

16. Verfahren zum Wechsel eines Werkzeugs (5, 5') einer materialentfernenden Bearbeitungsanlage (2), insbesondere zur Herstellung von Dentalteilen, wobei eine Bearbeitungsanlage (2) verwendet wird, die ein Werkzeugwechselsystem (1) nach einem der Ansprüche 1 bis 12 aufweist und ein computergestützt, insbesondere automatisiert, erfolgendes Wechseln eines Werkzeugs (5, 5') zwischen einer bearbeitungsanlagenseitigen Werkzeugschnittstelle (38) einem bearbeitungsanlagenseitigen Werkzeugmagazin (3) erfolgt.
